(19) Europäisches Patentamt
European Patent Office
Office européen des brevets

(11) EP 4 431 566 A1

(12) **EUROPEAN PATENT APPLICATION**
published in accordance with Art. 153(4) EPC

(43) Date of publication:
**18.09.2024 Bulletin 2024/38**

(21) Application number: **22892796.8**

(22) Date of filing: **09.11.2022**

(51) International Patent Classification (IPC):
***C08L 69/00*** (2006.01) ***B29C 70/40*** (2006.01)
***C08J 5/06*** (2006.01) ***C08K 3/04*** (2006.01)
***C08K 5/521*** (2006.01) ***C08K 7/06*** (2006.01)

(52) Cooperative Patent Classification (CPC):
**B29C 70/40; C08J 5/06; C08K 3/04; C08K 5/521; C08K 7/06; C08L 69/00;** Y02W 30/62

(86) International application number:
**PCT/JP2022/041640**

(87) International publication number:
**WO 2023/085298 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.11.2021 JP 2021183344**

(71) Applicants:
- **Mitsubishi Chemical Corporation**
  **Chiyoda-ku**
  **Tokyo 100-8251 (JP)**
- **Shinryo Corporation**
  **Kitakyushu-shi, Fukuoka, 806-0021 (JP)**

(72) Inventors:
- **TAKASHIMA Shoichi**
  **Hiratsuka-shi, Kanagawa 254-0016 (JP)**
- **SASAKA Ryo**
  **Kitakyushu-shi, Fukuoka 806-0004 (JP)**

(74) Representative: **Vossius & Partner**
**Patentanwälte Rechtsanwälte mbB**
**Siebertstrasse 3**
**81675 München (DE)**

# (54) PELLETS, MOLDED PRODUCT, AND PELLET MANUFACTURING METHOD

(57) To provide a pellet which is formed from a composition comprising 5 to 65 parts by mass of recycled carbon fibers as a heated product of carbon fiber reinforced resin, and 0.05 to 25 parts by mass of a nonmetal salt-based flame retardant, relative to 100 parts by mass of a polycarbonate resin having a terminal hydroxyl group content of 150 to 800 ppm.

EP 4 431 566 A1

## Description

[Technical Field]

The present invention relates to a pellet, a molded product, and a method for producing the pellet. In particular, the present invention relates to a pellet with effective utilization of recycled carbon fiber.

[Background Art]

Polycarbonate resins are widely used as resins having excellent heat resistance, impact resistance, transparency, etc., in many fields. In particular, polycarbonate resin compositions reinforced with inorganic fillers such as glass fibers and carbon fibers exhibit various excellent performances in dimensional stability, mechanical strength, heat resistance and electrical properties, and are therefore widely used in industrial fields such as cameras, office automation equipment, and electric and electronic parts (Patent Literature 1).

On the other hand, from the viewpoint of effective utilization of limited resources, recycling of carbon fibers has been studied. As a recycled carbon fiber, for example, the one described in Patent Literature 2 is known.

[Citation List]

[Patent Literature]

[Patent Literature 1]
Japanese Patent Laid-Open No. 2011-063812
[Patent Literature 2]
International Publication No. WO 2018/212016

[Summary of the Invention]

[Object of the Invention]

However, a polycarbonate resin blended with recycled carbon fibers has a mechanical strength inferior to ones blended with newly produced carbon fibers, i.e. virgin carbon fibers. With a mechanical strength of the composition containing a polycarbonate resin and recycled carbon fibers approaching those of a composition blended with virgin carbon fibers, improvement in the recycling rate of carbon fibers may be expected. On the other hand, the polycarbonate resin blended with recycled carbon fibers may also be required to have flame retardancy in some cases.

An object of the present invention is to solve such problems. The object of the present invention is to provide a pellet from which a molded product containing a polycarbonate resin and recycled carbon fibers, having a mechanical strength close to those of products blended with the same amount of virgin carbon fibers, and having excellent flame retardancy may be produced, the molded product, and a method for producing the pellet.

[Solution to Problem]

The present inventors conducted research to address the above-mentioned problems, and as a result, discovered that lowering the mechanical strength could be effectively reduced and excellent flame retardancy could be achieved, even though using recycled carbon fibers by blending a nonmetal salt-based flame retardant with the polycarbonate resin having a predetermined end group concentration. This led to the completion of the present invention.

Specifically, the problems described above are solved by the following means.

<1> A pellet formed from a composition comprising 5 to 65 parts by mass of recycled carbon fibers as a heated product of carbon fiber reinforced resin, and 0.05 to 25 parts by mass of a nonmetal salt-based flame retardant, relative to 100 parts by mass of a polycarbonate resin having a terminal hydroxyl group content of 150 to 800 ppm.

<2> The pellet according to <1>, wherein a flexural strength of an ISO multi-purpose test piece molded from the pellet measured according to ISO 178 is retained by a retention rate of 82% or more, as compared with a flexural strength of an ISO multi-purpose test piece molded from a composition in which the polycarbonate resin contained in the pellet is replaced with an equal amount of a polycarbonate resin having a terminal hydroxyl group content of 140 ppm and the recycled carbon fibers are replaced with virgin carbon fibers such that the amount of carbon fibers

is equal, measured according to ISO 178.
<3> The pellet according to <1> or <2>, wherein the polycarbonate resin comprises a recycled polycarbonate resin.
<4> The pellet according to any one of <1> to <3>, further comprising 0.5 to 30 parts by mass of a fluidity modifier relative to 100 parts by mass of the polycarbonate resin.
<5> The pellet according to any one of <1> to <4>, further comprising at least one selected from a mold release agent and carbon black in an amount of 0.1 to 10 parts by mass in total, relative to 100 parts by mass of the polycarbonate resin.
<6> The pellet according to any one of <1> to <5>, wherein the nonmetal salt-based flame retardant comprises at least one selected from a phosphorus-based flame retardant and a halogen-based flame retardant.
<7> The pellet according to any one of <1> to <6>, wherein the nonmetal salt-based flame retardant comprises 5 to 25 parts by mass of a phosphorus-based flame retardant relative to 100 parts by mass of a polycarbonate resin having a terminal hydroxyl group content of 150 to 800 ppm.
<8> The pellet according to any one of <1> to <7>, wherein the nonmetal salt-based flame retardant comprises 0.05 to 5 parts by mass of a halogen-based flame retardant relative to 100 parts by mass of polycarbonate resin having a terminal hydroxyl group content of 150 to 800 ppm.
<9> The pellet according to <1>,

wherein a flexural strength of an ISO multi-purpose test piece molded from the pellet measured according to ISO 178 is retained by a retention rate of 82% or more, as compared with a flexural strength of an ISO multi-purpose test piece molded from a composition in which the polycarbonate resin contained in the pellet is replaced with an equal amount of a polycarbonate resin having a terminal hydroxyl group content of 140 ppm and the recycled carbon fibers are replaced with virgin carbon fibers such that the amount of carbon fibers is equal, measured according to ISO 178,
the polycarbonate resin comprises a recycled polycarbonate resin,
the pellet further comprises 0.5 to 30 parts by mass of a fluidity modifier relative to 100 parts by mass of the polycarbonate resin,
the pellet further comprises at least one selected from a mold release agent and carbon black in an amount of 0.1 to 10 parts by mass in total, relative to 100 parts by mass of the polycarbonate resin, and
the nonmetal salt-based flame retardant comprises at least one selected from a phosphorus-based flame retardant and a halogen-based flame retardant.

<10> A molded product formed from the pellet according to any one of <1> to <9>.
<11> A method for producing a pellet, comprising feeding 100 parts by mass of a polycarbonate resin having a terminal hydroxyl group content of 150 to 800 ppm, 5 to 65 parts by mass of recycled carbon fibers as a heated product of a carbon fiber reinforced resin, and 0.05 to 25 parts by mass of a nonmetal salt-based flame retardant, into an extruder and melt-kneading the mixture.

[Advantageous Effect of the Invention]

According to the present invention, a pellet from which a molded product containing a polycarbonate resin and recycled carbon fibers, having a mechanical strength close to those of products blended with the same amount of virgin carbon fibers, and having excellent flame retardancy may be produced, the molded product, and a method for producing the pellet can be provided.

[Detailed Description]

Hereinafter, an embodiment for practicing the present invention (hereinafter, simply referred to as "the present embodiment") is described in detail. The following present embodiment is an example for explaining the present invention, and the present invention is not limited only to the present embodiment.
In the present specification, the term "to" is used to mean that the numerical values pre- and post-described are included as a lower limit and an upper limit.
In the present specification, various physical property values and characteristic values are at 23°C unless otherwise specified. In the present specification, ppm means ppm by mass.
In the case where the measurement methods, etc. described in a standard shown in the present specification differ from year to year, ones based on the standards as of January 1, 2021 are employed unless otherwise stated.
The pellet of the present embodiment is formed from a composition comprising 5 to 65 parts by mass of recycled carbon fibers as a heated product of carbon fiber reinforced resin, and 0.05 to 25 parts by mass of a nonmetal salt-based flame retardant, relative to 100 parts by mass of a polycarbonate resin having a terminal hydroxyl group content

of 150 to 800 ppm.

A molded product formed from such a pellet has a mechanical strength close to those of a product blended with the same amount of virgin carbon fibers, and is a pellet capable of providing a molded product with excellent flame retardancy. In particular, high flexural strength retention rate is achieved despite the use of recycled carbon fibers.

The reason is that recycled carbon fibers typically have no or very little sizing agent present on the surface. Under these circumstances, it is presumed that in the case where a nonmetal salt-based flame retardant is blended as flame retardant, the nonmetal salt-based flame retardant is effective as sizing agent, so that the retention rate of flexural strength and impact resistance can be enhanced.

Further, by using a polycarbonate resin having a terminal hydroxyl group content of 150 to 800 ppm, a higher flexural strength retention rate has been achieved. The reason is presumed that by adjusting the terminal hydroxyl group content of the polycarbonate resin to 150 to 800 ppm, the adhesion between the carbon fiber surface and the polycarbonate resin is improved, so that the mechanical strength has been improved.

The details of the pellet of the present embodiment are described below.

<Polycarbonate resin>

The composition for use in the present embodiment contains a polycarbonate resin having a terminal hydroxyl group content of 150 to 800 ppm. The type of polycarbonate resin is not particularly specified as long as the terminal hydroxyl group content thereof is 150 to 800 ppm. Typically, the main component is preferably an aromatic polycarbonate resin, more preferably a bisphenol type polycarbonate resin, and still more preferably a bisphenol A type polycarbonate resin. Here, the main component means a component that accounts for 80 mass% or more (preferably 90 mass% or more, more preferably 95 mass% or more) of the polycarbonate resin contained in the composition.

The polycarbonate resin may be a polycarbonate resin obtained by melt polymerization or a polycarbonate resin obtained by interfacial polymerization, preferably a polycarbonate resin obtained by melt polymerization. Alternatively, the polycarbonate resin may be a mixture of a polycarbonate resin obtained by melt polymerization and a polycarbonate resin obtained by interfacial polymerization.

More specifically, the polycarbonate resin for use in the present embodiment is preferably an aromatic polycarbonate resin, which may be produced, for example, from an aromatic dihydroxy compound and a carbonic acid diester as raw materials by melt transesterification.

Examples of the aromatic dihydroxy compound include bis(4-hydroxydiphenyl)methane, 2,2-bis(4-hydroxyphenyl)propane, 2,2-bis(4-hydroxy-3-methylphenyl)propane, 2,2-bis(4-hydroxy-3-t-butylphenyl)propane, 2,2-bis(4-hydroxy-3,5-dimethylphenyl)propane, 2,2-bis(4-hydroxy-3,5-dibromophenyl)propane, 4,4-bis(4-hydroxyphenyl)heptane, 1,1-bis(4-hydroxyphenyl)cyclohexane, 4,4'-dihydroxybiphenyl, 3,3',5,5'-tetramethyl-4,4'-dihydroxybiphenyl, bis(4-hydroxyphenyl)sulfone, bis(4-hydroxyphenyl)sulfide, bis(4-hydroxyphenyl)ether, and bis(4-hydroxyphenyl)ketone. These aromatic dihydroxy compounds may be used alone or in combination of two or more. Among these, 2,2-bis(4-hydroxyphenyl)propane is preferred.

Examples of the carbonic acid diester include diphenyl carbonate, a substituted diphenyl carbonate typically including ditolyl carbonate, and a dialkyl carbonate typically including dimethyl carbonate, diethyl carbonate and di-t-butyl carbonate. These carbonic acid diesters may be used alone or in combination of two or more. Among these, diphenyl carbonate and a substituted diphenyl carbonate are preferred.

The carbonic acid diester in an amount of preferably 50 mol% or less, more preferably 30 mol% or less, may be substituted with a dicarboxylic acid or a dicarboxylic acid ester. Examples of the typical dicarboxylic acids or dicarboxylic acid esters include terephthalic acid, isophthalic acid, diphenyl terephthalate and diphenyl isophthalate. Through substitution with such a dicarboxylic acid or dicarboxylic acid ester, a polyester carbonate resin is obtained.

These carbonic acid diesters (including the substituted dicarboxylic acids or esters of dicarboxylic acids) are usually used in excess relative to the aromatic dihydroxy compound. That is, the molar amount used is within the range of 1.001 to 1.3 times, preferably 1.01 to 1.2 times that of the aromatic dihydroxy compound.

The polycarbonate resin for use in the present embodiment has a terminal hydroxyl group content of 150 to 800 ppm. With use of a polycarbonate resin having a terminal hydroxyl group content of 150 to 800 ppm, the adhesion to the surface of recycled carbon fibers is enhanced, so that the mechanical strength can be held higher compared with the case where a polycarbonate resin having a terminal hydroxyl group content of less than 150 ppm is blended. In particular, flexural strength is allowed to be maintained high.

The content of the terminal hydroxyl group is preferably 200 ppm or more, more preferably 250 ppm or more, still more preferably 300 ppm or more, even more preferably 350 ppm or more, further preferably 400 ppm or more, furthermore preferably 450 ppm or more, particularly preferably 500 ppm or more, and may be 550 ppm or more. With a content equal to or more than the lower limit, the adhesion between the carbon fiber surface and the polycarbonate resin is improved, the reaction rate of transesterification is increased, and a polycarbonate resin having a desired molecular weight tends to be easily obtained. Further, the residual amount of the carbonate ester in the polycarbonate

resin can be reduced, and the odor during molding and the odor of a molded product tend to be more effectively reduced. The terminal hydroxyl group content is preferably 750 ppm or less, more preferably 700 ppm or less, still more preferably 650 ppm or less, even more preferably 640 ppm or less, and may be 610 ppm or less. With a content equal to or less than the upper limit, the thermal stability of the polycarbonate resin tends to be more improved.

The terminal hydroxyl group content is measured according to the description of the following Examples.

In the case where the composition for use in the present embodiment contains two or more types of polycarbonate resins, the terminal hydroxyl group content in the polycarbonate resin mixture is referred to.

In the present embodiment, in the case where a phosphate and/or a halogen-based flame retardant are included as flame retardant, the polycarbonate resin has a terminal hydroxyl group content of preferably 200 ppm or more, more preferably 250 ppm or more, still more preferably 300 ppm or more, even more preferably 350 ppm or more, further preferably 400 ppm or more, furthermore preferably 450 ppm or more, particularly more preferably 500 ppm or more, and may be 550 ppm or more. The content is preferably 750 ppm or less, more preferably 700 ppm or less, still more preferably 650 ppm or less, even more preferably 640 ppm or less, and the content may be 610 ppm or less.

In the present embodiment, in the case of including phosphazene as flame retardant, the polycarbonate resin preferably has a terminal hydroxyl group content of 300 ppm or more, more preferably 350 ppm or more, still more preferably 400 ppm or more, even more preferably 450 ppm or more, further preferably 500 ppm or more, furthermore preferably 550 ppm or more, particularly more preferably 600 ppm or more, and the content may be 650 ppm or more.

For details of the polycarbonate resin having a terminal hydroxyl group content of 150 to 800 ppm, the description of Japanese Patent Laid-Open No. 2003-026911 may be referred to, and the content thereof is incorporated herein.

The polycarbonate resin for use in the present embodiment (a mixture of polycarbonate resins in the case of including two or more types) has a melt volume rate (MVR) of preferably 1 $cm^3$/10 min or more, more preferably 5 $cm^3$/10 min or more, still more preferably 8 $cm^3$/10 min or more, and preferably 40 $cm^3$/10 min or less, more preferably 30 $cm^3$/10 min or less. With an MVR equal to or more than the lower limit, particularly with an MVR of 5 $cm^3$/10 min or more, high fluidity and excellent moldability tend to be achieved, and with an MVR equal to or less than the upper limit, impact resistance and heat resistance tend to be maintained at high levels. The MVR is measured according to JIS K 7210.

The polycarbonate resin for use in the present embodiment (a mixture of polycarbonate resins in the case of including two or more types) has a viscosity average molecular weight of preferably 5000 or more, more preferably 10000 or more, still more preferably 14000 or more, and preferably 50000 or less, more preferably 24000 or less. With use of one having a viscosity average molecular weight of 5000 or more, the mechanical strength of the resulting molded product tends to be more improved. With use of one having a viscosity average molecular weight of 50000 or less, the fluidity of molten pellet is improved and the moldability tends to be more improved.

The viscosity average molecular weight of the polycarbonate resin is a viscosity average molecular weight [Mv] converted from the solution viscosity measured at 25°C with use of methylene chloride as solvent.

The polycarbonate resin for use in the present embodiment may be a recycled polycarbonate resin. Use of recycled polycarbonate resin allows the pellet to be provided with reduced environmental load. As the recycled polycarbonate resin, those derived from bottles, discs, pachinko components, sheets, semiconductor transport containers, and the like are used. Preferably, the recycled polycarbonate resin is a recycled aromatic polycarbonate resin.

In the composition for use in the present embodiment, the content of the polycarbonate resin having a terminal hydroxyl group content of 150 to 800 ppm is preferably 60 to 95 mass%. The content of the polycarbonate resin having a terminal hydroxyl group content of 150 to 800 ppm in the resin component contained in the composition for use in the present embodiment is preferably 90 mass% or more, more preferably 95 mass% or more, still more preferably 97 mass% or more, and even more preferably 99 mass%.

The composition for use in the present embodiment may contain only one type of polycarbonate resin, or may contain two or more types. In the case where two or more types are included, the total amount is preferably within the above range.

<Recycled carbon fiber>

The composition for use in the present embodiment contains 5 to 65 parts by mass of recycled carbon fibers as a heated product of carbon fiber reinforced resin, relative to 100 parts by mass of a polycarbonate resin having a terminal hydroxyl group content of 150 to 800 ppm. With use of such recycled carbon fibers together with a nonmetal salt-based flame retardant allows the high mechanical strength comparable to that of a composition including a polycarbonate resin blended with virgin carbon fibers to be maintained. Since recycled carbon fibers usually contain substantially no treatment agents such as surface treatment agents and bundling agents, sufficient melt-kneading with a polycarbonate resin may be difficult in some cases. However, in the present embodiment, it is presumed that use of a heated product of carbon fiber reinforced resin as recycled carbon fibers allows the carbide as residue derived from the resin to function as treatment agent for the carbon fiber, so that stable melt kneading with the polycarbonate resin can be achieved.

Here, recycled carbon fibers refers to, for example, carbon fibers recovered from used carbon fiber reinforced resin (aircraft, vehicles, electric/electronic devices, etc.) and carbon fibers recovered from cut-off pieces of intermediate products (prepregs) of carbon fiber reinforced resin generated from production steps of carbon fiber reinforced resin. In contrast, virgin carbon fibers are generally new carbon fibers that are not recycled carbon fibers, such as those sold as carbon fibers.

In the present embodiment, a heated product of carbon fiber reinforced resin is used as the recycled carbon fibers. Through heating of a carbon fiber reinforced resin, the resin becomes a carbide, which is present on the surface of the carbon fibers.

The carbon fiber reinforced resin in the present embodiment contains carbon fibers and a matrix resin.

Although the type of carbon fibers is not particularly specified, PAN-based carbon fibers are preferred.

The matrix resin may be a thermosetting resin or a thermoplastic resin. The thermosetting resin may be an uncured or cured product. Examples of the thermosetting resins include epoxy resins, unsaturated polyester resins, vinyl ester resins, phenol resins, cyanate resins, and polyimide resins. Examples of the thermoplastic resins include polyamides, polyolefins, polyesters, polycarbonates, acrylic resins, acrylonitrile-butadiene-styrene copolymers, polyether ether ketones, and polyphenylene sulfides.

The matrix resin may contain additives on an as needed basis. Examples of the additives include curing agents, curing aids, internal mold release agents, antioxidants, light stabilizers, ultraviolet absorbers, and colorants.

The heating temperature of the carbon fiber reinforced resin is not particularly specified as long as it is a temperature at which the matrix resin is carbonized, being preferably 300 to 700°C, more preferably 400 to 700°C, and still more preferably 500 to 700°C.

For details of the recycled carbon fibers as a heated product of carbon fiber reinforced resin, the description in International Publication No. WO 2018/212016 may be referred to, and the content thereof is incorporated herein.

The resin residue content in the recycled carbon fibers is preferably 5 mass% or more, preferably 10 mass% or more, and preferably 20 mass% or less, more preferably 15 mass% or less.

As described above, recycled carbon fibers usually have substantially no treatment agents (sizing agents, bundling agents, surface treatment agents, etc.) on the surface. The term "substantially no" means that the amount of the treatment agent relative to the total amount of recycled carbon fibers is, for example, less than 1.0 mass%, or less than 0.1 mass%, particularly less than 0.01 mass%, and more particularly less than 0.001 mass%.

The number average fiber diameter of the recycled carbon fibers is more preferably 3 μm or more, and still more preferably 4 μm or more. The number average fiber diameter of the recycled carbon fibers is preferably 10 μm or less, more preferably 8 μm or less. With a number average fiber diameter of the recycled carbon fibers in the range, a pellet having improved mechanical properties, particularly improved strength and elastic modulus, tends to be easily obtained.

In the composition for use in the present embodiment, the content of the recycled carbon fibers as a heated product of carbon fiber reinforced resin is 5 parts by mass or more relative to 100 parts by mass of the polycarbonate resin having a terminal hydroxyl group content of 150 to 800 ppm, preferably 8 parts by mass or more, and may be 10 parts by mass or more, 13 parts by mass or more, or 15 parts by mass or more. With a content equal to or more than the lower limit, a composition having more excellent mechanical strength tends to be obtained. The content of the recycled carbon fibers relative to 100 parts by mass of the polycarbonate resin having a terminal hydroxyl group content of 150 to 800 ppm is 65 parts by mass or less, preferably 60 parts by mass or less, more preferably 55 parts by mass or less, and may be 50 parts by mass or less or 45 parts by mass or less. With a content equal to or less than the upper limit, a composition having excellent mechanical strength and moldability tends to be obtained.

Further, the composition for use in the present embodiment contains recycled carbon fibers as a heated product of carbon fiber reinforced resin, at a content in terms of the amount of substantial carbon fibers of preferably 5 mass% or more, more preferably 10 mass%, still more preferably 15 mass% or more, and preferably 45 mass% or less, more preferably 40 mass% or less.

The composition for use in the present embodiment may contain only one type of recycled carbon fibers as a heated product of carbon fiber reinforced resin, or may contain two or more types. In the case where two or more types are included, the total amount is preferably in the above range.

In the composition for use in the present embodiment, the total content of the polycarbonate resin having a terminal hydroxyl group content of 150 to 800 ppm, recycled carbon fibers, glass flakes, and a nonmetal salt-based flame retardant is preferably 90 mass% or more of the composition, more preferably 95 mass% or more, and still more preferably 97 mass% or more. The upper limit of the total content is 100 mass%.

The composition for use in the present embodiment may or may not contain virgin carbon fibers. An example of the composition for use in the present embodiment is an aspect in which virgin carbon fibers are contained at a ratio of 5 to 50 mass% (preferably 5 to 30 mass%) of the content of recycled carbon fibers. In another example of the composition for use in the present embodiment is an aspect in which the virgin carbon fiber content is less than 5 mass% (preferably less than 3 mass%, more preferably less than 1 mass%) of the content of recycled carbon fibers.

<Glass flake>

The composition for use in the present embodiment may or may not contain glass flakes. The inclusion of glass flakes tends to reduce the anisotropy of molding shrinkage.

The glass flakes have a thickness of preferably 0.1 to 7.0 μm. The thickness of glass flakes refers to the average thickness. The thickness of glass flakes is more preferably 0.4 μm or more, still more preferably 0.5 μm or more, and even more preferably 0.6 μm or more. Also, the thickness of glass flakes is more preferably 6.0 μm or less, and still more preferably 5.5 μm or less. Here, the average thickness is measured by the following method. That is, using a scanning electron microscope (SEM), the thickness of each of 100 or more glass flakes is measured, and the measured values are averaged. A sample stage of the scanning electron microscope is adjusted by a fine movement device of the sample stage so that the cross section (thickness plane) of a glass flake is perpendicular to the electron beam axis of the scanning electron microscope.

The glass flakes are preferably surface-treated with a known surface treatment agent such as silane coupling agent, methyl hydrogen siloxane, titanate coupling agent, and aluminate coupling agent, from the viewpoint of improving mechanical strength. Further, the glass flakes are preferably granulated or bundled with a binder such as acrylic resin, urethane resin, epoxy resin, unsaturated polyester resin, etc. from the viewpoint of handling. However, the average particle size range and thickness range of glass flakes described above do not apply to the granules or bundles obtained by such granulation or bundling.

The glass composition of glass flakes is not particularly limited, and various glass compositions typically including A glass, C glass and E glass may be appropriately selected and used.

In the case where the composition for use in the present embodiment contains glass flakes, the content thereof is preferably 2 parts by mass or more, more preferably 3 parts by mass or more, still more preferably 4 parts by mass or more, even more preferably 5 parts by mass or more, and furthermore preferably 10 parts by mass or more, relative to 100 parts by mass of the polycarbonate resin having a terminal hydroxyl group content of 150 to 800 ppm. With a content equal to or more than the lower limit, the effect of reducing the anisotropy of molding shrinkage tends to be more improved. The upper limit of the content of glass flakes is preferably 50 parts by mass or less, more preferably 40 parts by mass or less, still more preferably 30 parts by mass or less, and even more preferably 25 parts by mass or less, relative to 100 parts by mass of the polycarbonate resin having a terminal hydroxyl group content of 150 to 800 ppm. With a content equal to or less than the upper limit, the toughness of the material tends to be improved.

The composition for use in the present embodiment may contain only one type of glass flakes, or may contain two or more types. In the case where two or more types are included, the total amount is preferably within the above range.

<Non-fibrous filler>

The resin composition of the present embodiment may contain non-fibrous fillers other than glass flakes. Inclusion of non-fibrous inorganic fillers tends to further improve flame retardancy and mechanical strength.

Examples of the non-fibrous fillers include talc, mica, glass beads, silica, alumina, and talc is preferred.

In the present embodiment, the talc has an average particle size of preferably 8.5 μm or less, more preferably 2 μm or more, and still more preferably 4 μm or more. In measurement of the average particle size, the cross section of a resulting molded product is observed with a scanning electron microscope (SEM), and the number average value of 50 arbitrarily selected pieces is determined.

In the case where the resin composition of the present embodiment contains non-fibrous fillers, the content thereof relative to 100 parts by mass of the polycarbonate resin is preferably 0.1 parts by mass or more, more preferably 0.5 parts by mass or more, still more preferably 1.0 parts by mass or more, and preferably 5.0 parts by mass or less, more preferably 3.0 parts by mass or less.

The resin composition of the present embodiment may contain only one type of non-fibrous fillers, or may contain two or more types. In the case where two or more types are included, the total amount is preferably within the above range.

<Nonmetal salt-based flame retardant>

The composition for use in the present embodiment contains a nonmetal salt-based flame retardant with a content of 0.05 to 25 parts by mass relative to 100 parts by mass of the polycarbonate resin. Due to containing a nonmetal salt-based flame retardant, the composition can not only impart flame retardancy to a resulting molded product, but also enhance the mechanical properties. In particular, the retention rate of flexural strength and the impact resistance can be increased.

The nonmetal salt-based flame retardant for use in the present embodiment preferably contains at least one selected from a phosphorus-based flame retardant and a halogen-based flame retardant.

Examples of the phosphorus-based flame retardant include a phosphate and/or phosphazene.

As the phosphate, a phosphate compound represented by the following formula (1) is preferred.

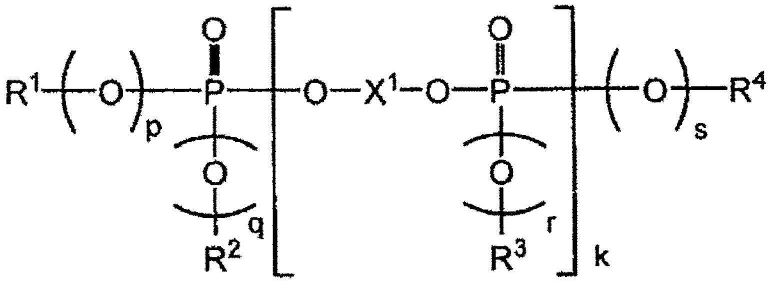

. . . (1)

wherein $R^1$, $R^2$, $R^3$ and $R^4$ each independently represent an alkyl group having 1 to 6 carbon atoms or an aryl group having 6 to 20 carbon atoms which may be substituted with an alkyl group, p, q, r and s are each independently 0 or 1, k is a number of 1 to 5, and $X^1$ represents an arylene group.

The phosphate compound represented by the formula (1) may be a mixture of compounds having a different number k, and in the case of a mixture of phosphates with a different number k, k is the averaged value for those mixtures. In the case of a mixture of compounds having a different number k, the averaged number k is in the range of preferably 1 to 2, more preferably 1 to 1.5, still more preferably 1 to 1.2, particularly preferably 1 to 1.15.

$X^1$ represents a divalent arylene group, and examples thereof include divalent groups derived from a dihydroxy compound such as resorcinol, hydroquinone, bisphenol A, 2,2'-dihydroxybiphenyl, 2,3'-dihydroxybiphenyl, 2,4'-dihydroxybiphenyl, 3,3'-dihydroxybiphenyl, 3,4'-dihydroxybiphenyl, 4,4'-dihydroxybiphenyl, 1,2-dihydroxynaphthalene, 1,3-dihydroxynaphthalene, 1,4-dihydroxynaphthalene, 1,5-dihydroxynaphthalene, 1,6-dihydroxynaphthalene, 1,7-dihydroxynaphthalene, 1,8-dihydroxynaphthalene, 2,3-dihydroxynaphthalene, 2,6-dihydroxynaphthalene and 2,7-dihydroxynaphthalene. Among these, a divalent group derived from resorcinol, bisphenol A, or 3,3'-dihydroxybiphenyl is particularly preferred.

Further, p, q, r and s in formula (1) each represent 0 or 1, preferably 1.

Further, $R^1$, $R^2$, $R^3$ and $R^4$ each represent an alkyl group having 1 to 6 carbon atoms, or an aryl group having 6 to 20 carbon atoms which may be substituted with an alkyl group. As such an aryl group, a phenyl group, a cresyl group, a xylyl group, an isopropylphenyl group, a butylphenyl group, a tert-butylphenyl group, a di-tert-butylphenyl group and a p-cumylphenyl group are preferred, and a phenyl group, a cresyl group and a xylyl group are more preferred.

Specific preferred examples of the phosphate represented by formula (1) include phenylresorcin polyphosphate, cresyl resorcin polyphosphate, phenyl cresyl resorcin polyphosphate, xylyl resorcin polyphosphate, phenyl-p-t-butylphenyl resorcin polyphosphate, phenyl isopropylphenyl resorcin polyphosphate, cresyl xylyl resorcin polyphosphate, and phenyl isopropylphenyl diisopropylphenyl resorcin polyphosphate.

The acid value of the phosphate compound represented by formula (1) is preferably 0.2 mg KOH/g or less, more preferably 0.15 mg KOH/g or less, still more preferably 0.1 mg KOH or less, and particularly preferably is 0.05 mg KOH/g or less. The lower limit of the acid value of the phosphate compound represented by formula (1) may be substantially 0 mg KOH/g.

On the other hand, phosphazene is an organic compound having a -P=N- bond in the molecule, and preferably at least one compound selected from the group consisting of a phosphazene compound represented by formula (2), a phosphazene compound represented by formula (3), and a crosslinked phosphazene compound including at least one phosphazene compound selected from the group consisting of the formula (2) and formula (3) crosslinked with a crosslinking group. As the crosslinked phosphazene compound, one crosslinked with a crosslinking group represented by the following formula (4) is preferred from the viewpoint of flame retardancy.

Phosphazene has a high flame-retardant effect, and through combination use of carbon black to be described later, excellent flame retardancy can be exhibited. Accordingly, decrease in mechanical strength and generation of gas resulting from the blending with a flame retardant can be suppressed.

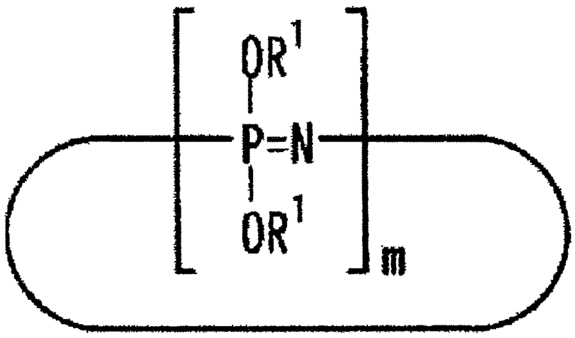

··· (2)

wherein m is an integer of 3 to 25, $R^1$ may be the same or different, and represents an alkyl group having 1 to 6 carbon atoms, or an aryl group having 6 to 20 carbon atoms, which may be substituted with an alkyl group.

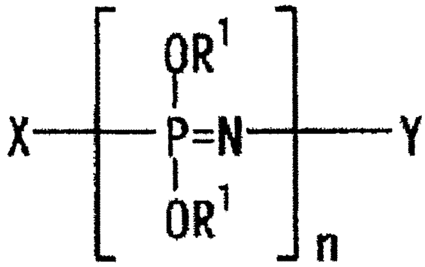

··· (3)

wherein n is an integer of 3 to 10000, X represents an - $N=P(OR^1)_3$ group or an $N=P(O)OR^1$ group, and Y represents a $-P(OR^1)_4$ group or a $P(O)(OR^1)_2$ group. $R^1$ may be the same or different, and represents an alkyl group having 1 to 6 carbon atoms, or an aryl group having 6 to 20 carbon atoms, which may be substituted with an alkyl group.

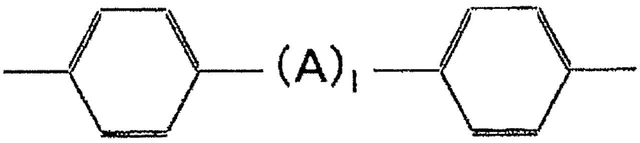

··· (4)

wherein A is $-C(CH_3)_2-$, $-SO_2-$, -S-, or -O-, and l is 0 or 1.

Examples of the phosphazene compounds represented by formulas (2) and (3) include a cyclic and/or chained $C_{1-6}$ alkyl $C_{6-20}$ aryloxyphosphazene such as phenoxyphosphazene, (poly)tolyloxyphosphazene (e.g., o-tolyloxyphosphazene, m-tolyloxyphosphazene, p-tolyloxyphosphazene, o, m-tolyloxyphosphazene, o, p-tolyloxyphosphazene, m, p-tolyloxyphosphazene, and o, m, p-tolyloxyphosphazene) and (poly) xylyloxyphosphazene, and a cyclic and/or chained $C_{6-20}$ aryl $C_{1-10}$ alkyl $C_{6-20}$ aryloxyphosphazene such as (poly)phenoxytolyloxyphosphazene (e.g., phenoxy o-tolyloxyphosphazene, phenoxy m-tolyloxyphosphazene, phenoxy p-tolyloxyphosphazene, phenoxy o, m- tolyloxyphosphazene, phenoxy o, p-tolyloxyphosphazene, phenoxy m, p-tolyloxyphosphazene, and phenoxy o, m, p-tolyloxyphosphazene), (poly)phenoxyxylyloxyphosphazene and (poly)phenoxytolyloxy xylyloxyphosphazene; and a cyclic and/or chained phenoxyphosphazene, a cyclic and/or chained $C_{1-3}$ alkyl $C_{6-20}$ aryloxyphosphazene, a $C_{6-20}$ aryloxy $C_{1-3}$ alkyl $C_{6-20}$ aryloxyphosphazene (e.g., cyclic and/or chained tolyloxyphosphazene, cyclic and/or chained phenoxytolylphenoxyphosphazene) are preferred.

As the compound represented by formula (2), a cyclic phenoxyphosphazene in which $R^1$ is a phenyl group is particularly preferred. Examples of the cyclic phenoxyphosphazene compounds include a compound such as phenoxycyclotriphosphazene, octaphenoxycyclotetraphosphazene and decaphenoxycyclopentaphosphazene obtained by reacting ammonium chloride with phosphorus pentachloride at a temperature of 120 to 130°C to obtain a mixture of cyclic and linear chlorophosphazenes, and extracting cyclic chlorophosphazenes such as hexachlorocyclotriphosphazene, octachlorcyclotetraphosphazene, decachlorocyclopentaphosphazene which are then substituted with a phenoxy group. The cyclic phenoxyphosphazene compound is preferably a compound having m of 3 to 5 in formula (2), and may be a

mixture of compounds having a different m. Among them, a mixture including 50 mass% or more of a compound having m of 3, and 10 to 40 mass% of a compound having m of 4, and 30 mass% or less of compounds having m of 5 or more in total is preferred.

As the phosphazene compound represented by formula (3), a chained phenoxyphosphazene in which $R^1$ is a phenyl group is particularly preferred. Examples of the chained phenoxyphosphazene compound include a compound obtained by subjecting the hexachlorocyclotriphosphazene obtained by the above method to ring-opening polymerization at a temperature of 220 to 250°C to obtain a linear dichlorophosphazene having a degree of polymerization of 3 to 10000, which is then substituted with a phenoxy group. In the linear phenoxyphosphazene compound, n in formula (3) is preferably 3 to 1000, more preferably 3 to 100, still more preferably 3 to 25.

Examples of the crosslinked phenoxyphosphazene compound includes a compound having a crosslinked structure of 4,4'-diphenylene group such as a compound having a crosslinked structure of 4,4'-sulfonyldiphenylene(bisphenol S residue), a compound having a crosslinked structure of 2,2-(4,4'-diphenylene)isopropylidene group, a compound having a crosslinked structure of 4,4'-oxydiphenylene group, and a compound having a crosslinked structure of 4,4'-thiodiphenylene group.

As the crosslinked phosphazene compound, a crosslinked phenoxyphosphazene compound obtained by crosslinking a cyclic phenoxyphosphazene compound represented by the formula (2) in which $R^1$ is a phenyl group with a crosslinking group represented by the above formula (4), or a crosslinked phenoxyphosphazene compound obtained by crosslinking a linear phenoxyphosphazene compound represented by the formula (3) in which $R^1$ is a phenyl group with a crosslinking group represented by the above formula (4), is preferred from the viewpoint of flame retardancy, and a crosslinked phenoxyphosphazene compound obtained by crosslinking a cyclic phenoxyphosphazene compound with a crosslinking group represented by the above formula (4) is more preferred.

Further, the content of phenylene groups in the crosslinked phenoxyphosphazene compound is usually 50 to 99.9%, preferably 70 to 90%, based on the total number of phenyl groups and phenylene groups in the cyclic phosphazene compound represented by formula (2) and/or the chained phenoxyphosphazene compound represented by formula (3). Further, it is particularly preferable that the crosslinked phenoxyphosphazene compound be a compound having no free hydroxyl group in the molecule.

As the phosphazene in the present embodiment, a cyclic phenoxyphosphazene compound represented by the above formula (2) is preferred in terms of flame retardancy and mechanical properties.

Examples of the halogen-based flame retardant include a flame retardant containing bromine (bromine-based flame retardant).

Although the type of bromine-based flame retardant is not particularly specified, brominated phthalimide, brominated poly(meth)acrylate, brominated polycarbonate, brominated epoxy, and brominated polystyrene are preferred, brominated poly(meth)acrylate, brominated polycarbonate and brominated epoxy are more preferred, and brominated polycarbonate is still more preferred.

As brominated phthalimide, one represented by formula (4) is preferred.

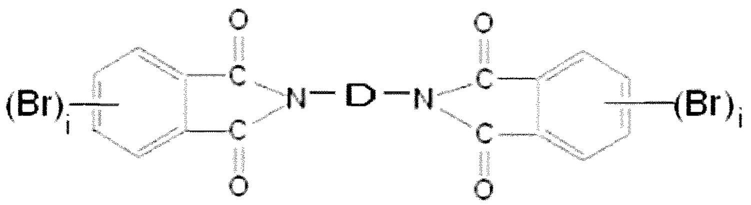

(4)

wherein D represents a group consisting of a combination of two or more of an alkylene group, an arylene group, $-S(=O)_2-$, - C(=O)-, and -O-; and i is an integer of 1 to 4.

In formula (4), D represents a group consisting of a combination of two or more of an alkylene group, an arylene group, $-S(=O)_2-$, -C(=O)-, and -O-. A group consisting of a combination of an alkylene group or an arylene group and at least one of $-S(=O)_2-$, -C(=O)-, and -O- is preferred, a group consisting of a combination of an alkylene group or an arylene group and one of $-S(=O)_2-$, - C(=O)-, and -O- is more preferred, and an alkylene group is still more preferred.

It is intended that examples of the group consisting of a combination of an alkylene group and -O- include a combination of two alkylene groups and one -O- (the same applies to other combinations).

The alkylene group as D is preferably an alkylene group having 1 to 6 carbon atoms, more preferably a methylene group, ethylene group, propylene group or butylene group. The arylene group is preferably a phenylene group.

Here, i is an integer of 1 to 4, preferably 4.

Examples of the brominated phthalimide represented by formula (4) include N,N'-(bistetrabromophthalimide)ethane, N,N'-(bistetrabromophthalimide)propane, N,N'-(bistetrabromophthalimide)butane, N,N'-(bistetrabromophthalimide)diethyl ether, N,N'-(bistetrabromophthalimide)dipropyl ether, N,N'-(bistetrabromophthalimide)dibutyl ether,

N,N '-(bistetrabromophthalimide)diphenylsulfone, N,N'-(bistetrabromophthalimide)diphenyl ketone, and N,N'-(bistetrabromophthalimide)diphenyl ether.

As the brominated phthalimide, the formula (4) is preferably a brominated phthalimide represented by formula (5).

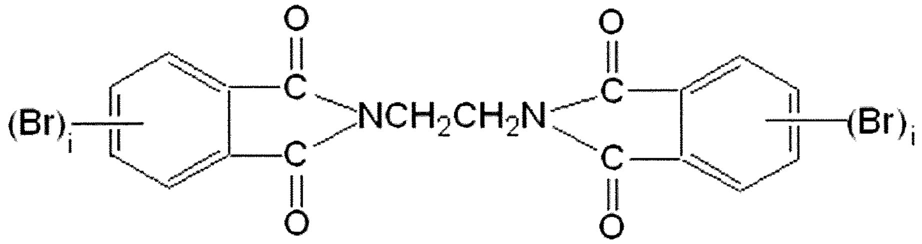 (5)

wherein i is an integer of 1 to 4.

Here, i is an integer of 1 to 4, and preferably 4.

As the brominated poly(meth)acrylate, a polymer obtained by polymerizing a bromine atom-containing benzyl(meth)acrylate alone, copolymerizing two or more thereof, or copolymerizing the same with another vinyl-based monomer is preferred. The bromine atom is added to the benzene ring, and the number of additions is preferably 1 to 5, particularly preferably 4 to 5, per benzene ring.

Examples of the bromine atom-containing benzyl acrylate include pentabromobenzyl acrylate, tetrabromobenzyl acrylate, tribromobenzyl acrylate, and a mixture thereof. Examples of the bromine atom-containing benzyl methacrylate include methacrylates corresponding to the acrylates described above.

Specific examples of other vinyl-based monomers for use in copolymerization with a bromine atom-containing benzyl(meth)acrylate include acrylates such as acrylic acid, methyl acrylate, ethyl acrylate, butyl acrylate, and benzyl acrylate; methacrylates such as methacrylic acid, methyl methacrylate, ethyl methacrylate, butyl methacrylate and benzyl methacrylate; unsaturated carboxylic acids or anhydrides thereof such as styrene, acrylonitrile, fumaric acid and maleic acid; and vinyl acetate and vinyl chloride.

These are usually used in an equimolar amount or less, particularly preferably in 0.5 times the molar amount or less, relative to the bromine atom-containing benzyl(meth)acrylate.

As the vinyl-based monomer, xylene diacrylate, xylene dimethacrylate, tetrabromoxylene diacrylate, tetrabromoxylene dimethacrylate, butadiene, isoprene, divinylbenzene, etc. may also be used, and these may be usually used in 0.5 times the molar amount or less relative to the bromine atom-containing benzyl acrylate or benzyl methacrylate.

The brominated poly(meth)acrylate is preferably a polymer obtained by polymerizing a bromine atom-containing (meth)acrylate monomer, particularly benzyl(meth)acrylate alone, copolymerizing two or more thereof, or copolymerizing the same with other vinyl-based monomers. Further, the bromine atom is added to the benzene ring, and the number of additions is preferably 1 to 5, particularly 4 to 5, per benzene ring.

As the brominated poly(meth)acrylate, pentabromobenzyl poly(meth)acrylate is preferred due to having a high bromine content.

The molecular weight of the brominated poly(meth)acrylate is optional and may be appropriately selected and determined. The weight average molecular weight (Mw) is preferably 3000 or more, more preferably 10000 or more, still more preferably 15000 or more, even more preferably 20000 or more, and furthermore preferably 25000 or more. With a weight average molecular weight (Mw) equal to or more than the above lower limit, a molded product having higher mechanical strength tends to be obtained. The upper limit of the weight average molecular weight (Mw) is preferably 100000 or less, more preferably 80000 or less, still more preferably 60000 or less, even more preferably 50000 or less, and furthermore preferably 35000 or less. With a weight average molecular weight (Mw) equal to or less than the above upper limit, the fluidity of the composition tends to be more improved.

The brominated polycarbonate has a free bromine content of preferably 0.05 mass% or more, and preferably 0.20 mass% or less. With a content controlled in such a range, the composition tends to have more improved heat resistance stability. The brominated polycarbonate has a chlorine atom content of preferably 0.001 mass% or more and preferably 0.20 mass% or less. With a content controlled in the range, mold corrosion resistance during molding tends to be more improved.

As a specific brominated polycarbonate, for example, a brominated polycarbonate obtained from brominated bisphenol A, particularly tetrabromobisphenol A, is preferred. Examples of the terminal structure thereof include a phenyl group, a 4-t-butylphenyl group, and a 2,4,6-tribromophenyl group, and those having a 2,4,6-tribromophenyl group in the terminal group structure is particularly preferred.

In the brominated polycarbonate, the average number of units constituting the carbonate may be appropriately selected and determined, preferably 2 to 30, more preferably 3 to 15, and still more preferably 3 to 10.

The molecular weight of the brominated polycarbonate is optional and may be appropriately selected and determined. The viscosity average molecular weight is preferably 1000 to 20000, and in particular, 2000 to 10000.

The brominated polycarbonate obtained from the brominated bisphenol A may be obtained through, for example, a conventional method of reacting brominated bisphenol with phosgene. Examples of terminal sealing agents include aromatic monohydroxy compounds, which may be substituted with a halogen or an organic group.

Specifically, preferred examples of brominated epoxies include bisphenol A-type brominated epoxy compounds typically represented by tetrabromobisphenol A epoxy compounds and glycidyl brominated bisphenol A epoxy compounds.

The molecular weight of the brominated epoxy compound is optional and may be appropriately selected and determined. The weight average molecular weight (Mw) is preferably 3000 or more, more preferably 10000 or more, still more preferably 13000 or more, even more preferably 15000 or more, and furthermore preferably 18000 or more. With a weight average molecular weight (Mw) equal to or more than the lower limit, a molded product having higher mechanical strength tends to be obtained. The upper limit of the weight average molecular weight (Mw) is preferably 100000 or less, more preferably 80000 or less, still more preferably 78000 or less, even more preferably 75000 or less, and furthermore preferably 70000 or less. With a weight average molecular weight (Mw) equal to or less than the upper limit, the composition tends to have more improved fluidity.

The brominated epoxy compound has an epoxy equivalent of preferably 3000 to 40000 g/eq, 4000 to 35000 g/eq in particular, and particularly preferably 10000 to 30000 g/eq.

As the brominated epoxy, a brominated epoxy oligomer may be also used in combination. In that case, for example, by using an oligomer having an Mw of 5000 or less in a proportion of about 50 mass% or less, the flame retardancy, mold releasability and fluidity may be appropriately adjusted. The bromine atom content in the brominated epoxy compound is optional, usually 10 mass% or more, preferably 20 mass% or more, particularly preferably 30 mass% or more, to impart sufficient flame retardancy. The upper limit is 60 mass%, particularly preferably 55 mass% or less.

Preferred examples of the brominated polystyrene include a brominated polystyrene containing a structural unit represented by formula (6).

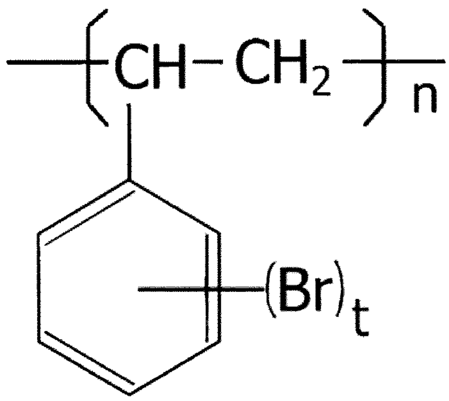

(6)

wherein t is an integer of 1 to 5, and n is the number of the structural units.

The brominated polystyrene may be produced by brominating polystyrene or by polymerizing brominated styrene monomers, and the polymerized brominated styrene is preferred due to containing a smaller amount of free bromine (atoms). In formula (6), the CH group to which brominated benzene is bonded may be substituted with a methyl group. Alternatively, the brominated polystyrene may be a copolymer obtained by copolymerizing other vinyl-based monomers. Examples of the vinyl-based monomers in that case include styrene, α-methylstyrene, (meth)acrylonitrile, methyl (meth)acrylate, butadiene and vinyl acetate. Also, the brominated polystyrenes may be used alone or as a mixture of two or more different structures, and may contain units derived from styrene monomers with a different number of bromines in a single molecular chain.

Specific examples of the brominated polystyrene include poly(4-bromostyrene), poly(2-bromostyrene), poly(3-bromostyrene), poly(2,4-dibromostyrene), poly(2,6 -dibromostyrene), poly(2,5-dibromostyrene), poly(3,5-dibromostyrene), poly(2,4,6-tribromostyrene), poly(2,4,5-tribromostyrene), poly(2,3,5-tribromostyrene), poly(4-bromo-α-methylstyrene), poly(2,4-dibromo-α-methylstyrene), poly(2,5-dibromo-α- methylstyrene), poly(2,4,6-tribromo-α-methylstyrene) and poly(2,4,5-tribromo-α-methylstyrene), and, in particular, poly(2,4,6-tribromostyrene), poly(2,4,5-tribromostyrene), and a polydibromostyrene or polytribromostyrene containing an 2 to 3 bromine groups on average in the benzene ring are preferably used.

The brominated polystyrene has a structural unit number n (average degree of polymerization) in formula (6) of preferably 30 to 1500, more preferably 150 to 1000, particularly preferably 300 to 800. With an average degree of

polymerization of less than 30, blooming tends to occur, and with an average degree of polymerization of more than 1500, poor dispersion tends to occur, which results in poor mechanical properties. The weight average molecular weight (Mw) of the brominated polystyrene is preferably 5000 to 500000, more preferably 10000 to 500000, still more preferably 10000 to 300000, even more preferably 10000 to 100000, and furthermore preferably 10000 to 70000. In particular, in the case of the polystyrene bromide described above, the weight average molecular weight (Mw) is preferably 50000 to 70000, and in the case of the brominated polystyrene obtained by polymerization, the weight average molecular weight (Mw) is preferably about 10000 to 30000. The weight average molecular weight (Mw) may be determined as a value in terms of standard polystyrene by GPC measurement.

The bromine concentration in the bromine-based flame retardant is preferably 45 mass% or more, more preferably 48 mass% or more, and still more preferably 50 mass% or more. With a content equal to or more than the lower limit, the flame retardancy of a molded product tends to be effectively improved. The upper limit of the bromine concentration is preferably 75 mass% or less, more preferably 73 mass% or less, and still more preferably 71 mass% or less.

The content of the nonmetal salt-based flame retardant in the composition for use in the present embodiment is 0.05 parts by mass or more, preferably 0.10 parts by mass or more, and still more preferably 0.50 parts by mass or more, relative to 100 parts by mass of the polycarbonate resin having a terminal hydroxyl group content of 150 to 800 ppm. With a content equal to or more than the lower limit, the resulting molded product tends to have enhanced flame retardancy and increased retention rate of mechanical strength. Further, the upper limit of the content of the nonmetal salt-based flame retardant is preferably 25 parts by mass or less, more preferably 23 parts by mass or less, relative to 100 parts by mass of the polycarbonate resin having a terminal hydroxyl group content of 150 to 800 ppm. With a content equal to or less than the upper limit, the resulting molded product tends to have more improved appearance and mechanical strength.

The composition for use in the present embodiment may contain only one type of nonmetal salt-based flame retardant, or may contain two or more types. In the case where two or more types are included, the total amount is preferably within the above range.

In particular, the composition for use in the present embodiment has a phosphorus-based flame retardant content of preferably 5 parts by mass or more, more preferably 10 parts by mass or more, still more preferably 15 parts by mass or more, and preferably 23 parts by mass or less, relative to 100 parts by mass of the polycarbonate resin having a terminal hydroxyl group content of 150 to 800 ppm. With a content equal to or more than the lower limit, the resulting molded product tends to have enhanced flame retardancy and increased retention rate of mechanical strength. With a content equal to or less than the upper limit, the resulting molded product tends to have improved appearance and mechanical strength.

Further, the composition for use in the present embodiment has a content of the halogen-based flame retardant of preferably 5 parts by mass or less, more preferably 3 parts by mass or less, still more preferably 1 part by mass or less, and preferably 0.1 part by mass or more, and more preferably 0.3 parts by mass or more, relative to 100 parts by mass of the polycarbonate resin having a terminal hydroxyl group content of 150 to 800 ppm. With a content equal to or less than the upper limit, the resulting molded product tends to have more improved appearance and mechanical strength.

The pellet of the present embodiment may or may not contain a metal salt-based flame retardant.

It is preferable that the pellet of the present embodiment contains substantially no metal salt-based flame retardant. The term "containing substantially no" means that the composition has a metal salt-based flame retardant content of 10 mass% or less, preferably 5 mass% or less, more preferably 1 mass% or less, and still more preferably 0.1% by mass or less, relative to the metal salt-based flame retardant content.

<Flame retardant aid>

The composition for use in the present embodiment may contain a flame retardant aid.

It is more preferable that the flame retardant aid contain an antimony compound. The flame retardant aid (preferably an antimony compound) contained acts with the bromine-based flame retardant so that the flame retardancy tends to be synergistically improved.

As the antimony compound, antimony trioxide ($Sb_2O_3$), antimony pentoxide ($Sb_2O_5$), sodium antimonate, etc. are preferred, and in particular, antimony trioxide is preferred.

In the present embodiment, the mass ratio (Br/Sb) between the bromine atoms contained in the bromine-based flame retardant and the antimony atoms contained in the antimony compound is preferably 0.3 or more, more preferably 1.0 or more, and preferably 5.0 or less, more preferably 4.0 or less. With a mass ratio in such a range, flame retardancy tends to be easily exhibited.

In the composition for use in the present embodiment, it is preferable that the antimony compound be blended with a thermoplastic resin as a masterbatch. Thus, the antimony compound easily exists in the thermoplastic resin phase, so that thermal stability during melt-kneading and molding is improved, decrease in impact resistance is suppressed,

and variations in flame retardancy and impact resistance tend to be reduced.

The antimony compound content in the masterbatch is preferably 20 to 90 mass%. The antimony compound content in the masterbatch is more preferably 30 mass% or more, still more preferably 40 mass% or more, even more preferably 50 mass% or more, furthermore preferably 60 mass% or more, and particularly more preferably 70 mass% or more.

In the case where the composition for use in the present embodiment contains a flame retardant aid, the flame retardant aid (preferably an antimony compound) content is preferably 0.1 parts by mass or more, more preferably 1.0 parts by mass or more, still more preferably 2.0 parts by mass or more, and even more preferably 3.0 parts by mass or more, relative to 100 parts by mass of the polycarbonate resin having a terminal hydroxyl group content of 150 to 800 ppm. With a content equal to or more than the lower limit, the flame retardancy of the resulting molded product is more improved. The upper limit of the flame retardant aid (preferably antimony compound) content is preferably 20.0 parts by mass or less, more preferably 15.0 parts by mass or less, still more preferably 10.0 parts by mass or less, even more preferably 8.0 parts by mass or less, and furthermore preferably 7.0 parts by mass or less relative to 100 parts by mass of the polycarbonate resin having a terminal hydroxyl group content of 150 to 800 ppm. With a content equal to or less than the upper limit, the resulting molded product tends to have improved mold releasability and impact resistance.

<Anti-dripping agent>

The composition for use in the present embodiment may contain an anti-dripping agent. The anti-dripping agent contained allows the resulting molded product to have more improved flame retardancy.

As the anti-dripping agent, polytetrafluoroethylene (PTFE) is preferred, having fibril formability, easily dispersing in a polycarbonate resin, and exhibiting a tendency to form a fibrous material through bonding resins to each other. Specific examples of polytetrafluoroethylene include a trade name "Teflon (R) 6J" or "Teflon (R) 30J" commercially available from DuPont-Mitsui Fluorochemicals Co., Ltd., a trade name "POLYFRON" commercially available from Daikin Chemical Industries, and a trade name "FLUON" commercially available from Asahi Glass Co., Ltd.

In the case where the composition for use in the present embodiment contains an anti-dripping agent, the content thereof is preferably 0.01 parts by mass or more, more preferably 0.05 parts by mass or more, and still more preferably 0.08 parts by mass or more, relative to 100 parts by mass of the polycarbonate resin having a terminal hydroxyl group content of 150 to 800 ppm. With a content equal to or more than the lower limit, the flame retardancy of pellet or a molded product tends to be more improved. The upper limit of the anti-dripping agent content is preferably 10 parts by mass or less, more preferably 5 parts by mass or less, still more preferably 3 parts by mass or less, relative to 100 parts by mass of the polycarbonate resin having a terminal hydroxyl group content of 150 to 800 ppm. With a content equal to or less than the upper limit, the mechanical strength of the resulting molded product tends to be more improved.

The composition for use in the present embodiment may contain only one type of anti-dripping agent, or may contain two or more types. In the case where two or more types are included, the total amount is preferably within the above range.

<Fluidity modifier>

The composition for use in the present embodiment preferably contains 0.5 to 30 parts by mass of a fluidity modifier relative to 100 parts by mass of the polycarbonate resin having a terminal hydroxyl group content of 150 to 800 ppm. The fluidity modifier contained allows the fluidity of the polycarbonate resin to be improved, with excellent flexural strength maintained.

The fluidity modifier for use in the present embodiment may be a known one, which may be one having a low molecular weight, an oligomer (number average molecular weight of less than 2000), or one having a high molecular weight (number average molecular weight of 2000 or more) . In the present embodiment, for example, an oligomer having a number average molecular weight of 1000 or more and less than 2000 may be used. Here, the number average molecular weight is a value in terms of polystyrene measured by GPC (gel permeation chromatography) method.

Specific examples include polyester oligomers, polycarbonate oligomers, polycaprolactone, low-molecular-weight acrylic copolymers, and aliphatic rubber-polyester block copolymers, and polycarbonate oligomers are preferred.

Regarding the fluidity modifier, the descriptions in paragraphs 0050 to 0056 of Japanese Patent No. 4736260 and the descriptions in paragraphs 0059 to 0070 of Japanese Patent Laid-Open No. 2011-063812 may be referred to, and the contents thereof are incorporated herein.

In the composition for use in the present embodiment, the content of the fluidity modifier is preferably 0.5 parts by mass or more, more preferably 1 part by mass or more, still more preferably 2 parts by mass or more, even more preferably 3 parts by mass or more, and furthermore preferably 5 parts by mass or more, relative to 100 parts by mass of the polycarbonate resin having a terminal hydroxyl group content of 150 to 800 ppm. With a content equal to or more than the lower limit, the fluidity of the polycarbonate resin having a terminal hydroxyl group content of 150 to 800 ppm

tends to be more improved. The content of the fluidity modifier is preferably 30 parts by mass or less, more preferably 25 parts by mass or less, still more preferably 20 parts by mass or less, even more preferably 17 parts by mass or less, and furthermore preferably 16 parts by mass or less, relative to 100 parts by mass of the polycarbonate resin having a terminal hydroxyl group content of 150 to 800 ppm. With a content equal to or less than the upper limit, the polycarbonate resin tends to have more improved fluidity without lowering of heat resistance and impact resistance.

The composition for use in the present embodiment may contain only one type of fluidity modifier, or may contain two or more types. In the case where two or more types are included, the total amount is preferably within the above range.

<Other components>

The composition for use in the present embodiment may contain other components than those described above. Examples thereof include thermoplastic resins other than polycarbonate resins, dyes, pigments, impact resistance modifiers, antistatic agents, slip agents, antiblocking agents, mold release agents, antifog agents, natural oils, synthetic oils, waxes, and organic fillers. The total content of these components may be, for example, 0.1 to 10 mass% of the composition.

The composition for use the present embodiment contains, for example, at least one selected from a mold release agent and carbon black in an amount of 0.1 to 10 parts by mass (preferably 0.5 to 5 parts by mass) in total, relative to 100 parts by mass of a polycarbonate resin.

As the mold release agent, the description in paragraphs 0054 to 0064 of Japanese Patent Laid-Open No. 2021-031633 and the description in paragraphs 0038 to 0044 of Japanese Patent Laid-Open No. 2019-056035 may be referred to, and the contents thereof are incorporated herein.

As the carbon black, the description in paragraphs 0065 to 0068 of Japanese Patent Laid-Open No. 2021-031633 and the description in paragraphs 0014 to 0025 of Japanese Patent Laid-Open No. 2019-056035 may be referred to, and the contents thereof are incorporated herein.

<Physical properties>

A molded product obtained from the pellet of the present embodiment preferably has a high flexural strength close to that of a polycarbonate resin blended with virgin carbon fibers.

The flexural strength of an ISO multi-purpose test piece molded from the pellet of the present embodiment measured according to ISO 178 is preferably retained by a retention rate of 82% or more, as compared with the flexural strength of an ISO multi-purpose test piece molded from a pellet in which the polycarbonate resin contained in the pellet is replaced with an equal amount of a polycarbonate resin having a terminal hydroxyl group content of 140 ppm and the recycled carbon fibers are replaced with virgin carbon fibers such that the amount of carbon fibers is equal, measured according to ISO 178. The ISO multi-purpose test piece is an 80 mm by 10 mm by 4 mm thick flat plate test piece (for example, an 80 mm by 10 mm by 4 mm thick flat plate test piece cut out from an ISO multipurpose test piece). The retention rate is more preferably 84% or more, still more preferably 86% or more, even more preferably 88% or more, and furthermore preferably 90% or more. A practical upper limit of the value is 105% or less.

Such a high retention rate is achieved by blending the polycarbonate resin having a terminal hydroxyl group content of 150 to 800 ppm with a nonmetal salt-based flame retardant.

The molded product obtained from the pellet of the present embodiment preferably has excellent flame retardancy.

Specifically, in a UL94 test, a UL test piece with a thickness of 1.5 mm molded from the pellet of the present embodiment has a flame retardancy that satisfies preferably V-2, more preferably V-1 and still more preferably V-0.

<Production method of pellet>

The pellet for use in the present embodiment may be produced by a conventional method for producing pellet containing a polycarbonate resin. For example, the pellet for use in the present embodiment is produced by a method including feeding a polycarbonate resin having a terminal hydroxyl group content of 150 to 800 ppm, 5 to 65 parts by mass of recycled carbon fibers as a heated product of a carbon fiber reinforced resin, and 0.05 to 25 parts by mass of a nonmetal salt-based flame retardant, into an extruder and melt-kneading the mixture. Recycled carbon fibers may not include a surface treatment agent or bundling agent attached to the surface of the carbon fibers. However, in the present embodiment, a heated product of carbon fiber reinforced resin is used as the recycled carbon fibers. As a result, residues derived from the resin function as surface treatment agent etc., so that the mixture fed into the extruder can be melt-kneaded to produce a pellet.

Each of the components may be premixed and supplied to an extruder at once. Alternatively, each of the components may not be premixed or only a part thereof may be premixed, and supplied to an extruder using a feeder.

The extruder may be a single screw extruder or a twin screw extruder. Alternatively, a part of components of dyes and pigments (for example, carbon black) may be melt-kneaded with a resin component to prepare a masterbatch, and then the rest of the components may be blended and melt-kneaded.

It is also preferable to supply carbon fibers from a side feeder in the middle of the cylinder of the extruder.

The heating temperature for melt-kneading may usually be appropriately selected from the range of 250 to 350°C.

<Molded product>

The molded product of the present embodiment is formed from the pellet of the present embodiment.

Due to having good mechanical strength, the molded product of the present embodiment may be used in various applications such as various storage containers, electrical and electronic equipment parts, office automation (OA) equipment parts, home appliance parts, machine mechanism parts, and vehicle mechanism parts.

<Production method of molded product>

The method for producing the molded product of the present embodiment is not particularly limited, and any molding method generally employed for a composition or pellet containing a polycarbonate resin may be employed. Examples thereof include injection molding, ultra-high speed injection molding, injection compression molding, two-color molding, hollow molding such as gas assisting, molding with use of a heat insulated mold, and molding with use of a rapidly heated molds, foam molding (including supercritical fluid), insert molding, IMC (in-mold coating) molding, extrusion molding, sheet molding, thermoforming, rotational molding, laminate molding, press molding and blow molding, and injection molding is particularly preferred.

Details of injection molding may be referred to paragraphs 0113 to 0116 of Japanese Patent No. 6183822, and the contents thereof are incorporated herein.

[Examples]

The present invention will be described more specifically with reference to the following Examples. The materials, amounts used, ratios, processing details, processing procedures, etc. shown in the following Examples may be appropriately changed without departing from the gist of the present invention. Accordingly, the scope of the present invention is not limited to the specific Examples shown below.

In the case where the measuring instruments used in Examples are discontinued and difficult to obtain, other instruments having equivalent performance may be used for measurement.

1. Raw materials

The raw material components used in the following Examples and Comparative Examples are as shown in the following Tables 1 and 2.

[Table 1]

| Component | Details |
|---|---|
| PC-1 | Aromatic polycarbonate resin obtained by melt transesterification<br>Manufactured by Mitsubishi Engineering-Plastics Corporation<br>Trade name: Novarex (R) 7019J<br>Viscosity average molecular weight Mv: 18000, MVR: 20 $cm^3$/10 min<br>Terminal hydroxyl group content: 590 ppm |
| PC-2 | Aromatic polycarbonate resin obtained by interfacial polymerization<br>Manufactured by Mitsubishi Engineering-Plastics Corporation<br>Trade name: lupilon (R) S-3000FN<br>Viscosity average molecular weight Mv: 21000, MVR: 13 $cm^3$/10 min<br>Terminal hydroxyl group content: 140 ppm |

(continued)

| Component | Details |
|---|---|
| PC-3 | Aromatic polycarbonate resin obtained by melt transesterification<br>Manufactured by Mitsubishi Engineering-Plastics Corporation<br>Trade name: Novarex (R) 7022J<br>Viscosity average molecular weight Mv: 22000, MVR: 13 $cm^3$/10 min<br>Terminal hydroxyl group content: 530 ppm |
| PC-4 | Aromatic polycarbonate resin obtained by melt transesterification<br>Manufactured by Mitsubishi Engineering-Plastics Corporation<br>Trade name: Novarex (R) 7027BF<br>Viscosity average molecular weight Mv: 25000, MVR: 3 $cm^3$/10 min<br>Terminal hydroxyl group content: 840 ppm |
| PC-5 | Aromatic polycarbonate resin obtained by melt transesterification<br>Manufactured by Mitsubishi Engineering-Plastics Corporation<br>Trade name: Novarex (R) 7028B<br>Viscosity average molecular weight Mv: 28000, MVR: 1 $cm^3$/10 min<br>Terminal hydroxyl group content: 410 ppm |
| Fluidity modifier | Manufactured by Mitsubishi Gas Chemical Company, Inc.<br>Trade name: AL071<br>Number average molecular weight: 1500<br>Polycarbonate oligomer |

[Table 2]

| Component | Details |
|---|---|
| Virgin carbon fiber-1 | Manufactured by Mitsubishi Chemical Corporation<br>Trade name: TR06UL<br>Number average fiber diameter: 6 μm, Bundling agent: urethane-based, 2.5 mass%<br>Resin residue content: 0 mass% |
| Virgin carbon fiber-2 | Manufactured by Mitsubishi Chemical Corporation<br>Trade name: TR06U<br>Number average fiber diameter: 7 μm, Bundling agent: urethane-based, 2.5 mass%<br>Resin residue content: 0 mass% |
| Recycled carbon fiber | Recycled carbon fiber obtained by heat treating carbon fiber reinforced resin<br>Number average fiber diameter: 6 μm, Bundling agent: 0 mass%<br>Resin residue content: 13 mass% |
| Glass flake | Manufactured by The Nippon Sheet Glass Co., Ltd.<br>Trade name: Microglass Fleka REFG-101<br>Average diameter: 600 μm, average thickness: 5 μm |
| Phosphorus-based flame retardant | Phosphate, PX200 manufactured by Daihachi Chemical Industry Co., Ltd. |
| | Cyclic phenoxyphosphazene, FP-110T manufactured by Fushimi Pharmaceutical Co., Ltd. |
| Bromine-based flame retardant | Brominated polycarbonate<br>"FR-53" manufactured by Mitsubishi Gas Chemical Company, Inc. Bromine concentration: 58 mass%, free bromine content: 0.11 mass%, chlorine compound content: 0.02 mass% |
| Anti-dripping agent | Anti-dripping agent manufactured by Chemours-Mitsui Fluoroproducts Co., Ltd., PTFE 6-J, Teflon |

(continued)

| Component | Details |
|---|---|
| Talc | Manufactured by Hayashi Kasei Co., Ltd., 5000S, average particle size: 5 μm |
| Mold release agent | Manufactured by Clariant Japan K.K.<br>Trade name: Licowax PE 520<br>Polyethylene wax |
| Carbon black master batch | Carbon black MB, manufactured by ECCA Co., Ltd., 948G |

<Amount of residue>

The recycled carbon fiber residue in Table 2 indicates the amount of carbide in recycled carbon fibers. That is, since the recycled carbon fibers for use in the present embodiment is a heated product of a composite of a resin (e.g. epoxy resin) and carbon fibers, the recycled carbon fibers contain residue (carbide) derived from the resin (e.g. epoxy resin). The amount of resin residue is a value obtained from formula (X) by calculating the mass of carbon fibers contained in the carbon fiber reinforced resin before heat treatment from the carbon fiber content. The unit is mass%.

$$[B-(A\times C)/(B)]\times 100 \quad \text{Formula (X)}$$

A: Mass of carbon fiber reinforced resin before heat treatment
B: Mass of heat-treated product
C: Carbon fiber content in carbon fiber reinforced resin before heat treatment

<Terminal hydroxyl group content in polycarbonate resin>

The terminal hydroxyl group content in a polycarbonate resin (PC resin) represents the total content of terminal hydroxyl groups shown below, which is the ratio of the mass of the terminal hydroxyl groups relative to the total mass of polycarbonate resin expressed in ppm. The measurement method is according to the colorimetric determination by the titanium tetrachloride/acetic acid method (method described in Macromol. Chem. 88, 215 (1965)).

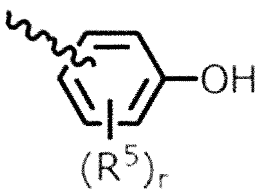

wherein $R^5$ is a group selected from a halogen atom, a nitro group, a cyano group, an alkyl group having 1 to 20 carbon atoms, an alkoxycarbonyl group having 2 to 20 carbon atoms, a cycloalkyl group having 4 to 20 carbon atoms and an aryl group having 6 to 20 carbon atoms, and r represents an integer of 0 to 2; two $R^5$ may be the same or different when r is 2; and the wavy line part represents a bonding position with the main chain of the polycarbonate resin.

2. Examples 1 to 7 and Comparative Examples 1 to 5

<Compound>

Each raw material shown in Tables 4 to 6 was weighed such that the content (unit: parts by mass in any case) shown in the table was obtained. By using a twin-screw extruder equipped with one vent, the raw materials other than carbon fibers were fed to the extruder from a barrel upstream of the extruder, and carbon fibers were side-fed. The mixture was kneaded under conditions at a screw rotation speed of 300 rpm, a discharge amount of 200 kg/hour, and a barrel temperature of 280 to 310°C, and extruded into a strand shape. The molten pellet was quenched in a water bath and pelletized with a pelletizer to obtain a pellet.

<Molding of test piece>

The pellet thus obtained was dried at 120°C for 5 hours, and then injection-molded with an injection molding machine ("J85AD" manufactured by The Japan Steel Works, Ltd.) under conditions at a cylinder temperature of 300°C, a mold temperature of 100°C, and a molding cycle of 50 seconds, so that an ISO multi-purpose test piece (4 mm thick) was prepared.

<Tensile strength, tensile modulus and tensile strain>

The ISO multi-purpose test piece thus obtained was subjected to a tensile test according to ISO527-1 and ISO527-2 to determine the tensile strength, tensile modulus and tensile strain.
The units for tensile strength and tensile modulus are MPa. The unit for tensile strain is %.

<Flexural strength, retention rate of flexural strength and flexural modulus>

From the ISO multi-purpose test piece thus obtained, a flat plate test piece of 80 mm by 10 mm by 4 mm thickness was prepared and subjected to measurement of the flexural strength and flexural modulus of the test piece according to ISO178. Also, the retention rate of flexural strength was calculated.
The units for the flexural strength and flexural modulus are MPa. The unit for the retention rate of flexural strength is %.
The retention rate of flexural strength is shown in a relative value to the flexural strength of Comparative Example 1 as 100% in Comparative Examples 1 and 2, Example 1, and Comparative Example 5 shown in a relative value to the flexural strength of Comparative Example 3 as 100% in Comparative Examples 3, 4, and Example 2, and shown in a relative value to the flexural strength of Comparative Example 1 as 100% in Examples 3 to 7.

<Charpy impact strength without notch>

The ISO multi-purpose test piece thus obtained was subjected to measurement of Charpy impact strength (without notch) at 23°C according to ISO179-1 and ISO179-2. The unit is shown in $kJ/m^2$

<Flame Retardancy>

The pellet thus obtained was injection-molded with an injection molding machine ("SE50DUZ" manufactured by Sumitomo Heavy Industries, Ltd.) under the conditions at a resin temperature of 290°C and a mold temperature of 80°C, so that a UL test piece having a length of 127 mm, a width of 12.7 mm and a wall thickness of 1.5 mm was obtained.
The resulting UL test piece was conditioned in a constant temperature chamber at 23°C and a relative humidity of 50% for 48 hours, and subjected to a test according to UL94 test (Tests for Flammability of Plastic Materials for Parts in Devices and Appliances) specified by Underwriters Laboratories (UL) in the United States.
The UL94 test is a method for evaluating flame retardancy from the afterflame time and dripping properties after contacting the test piece held vertically with a burner flame for 10 seconds. In order to have a flame retardancy of V-0, V-1 or V-2, it is necessary to satisfy the criteria shown in the following Table 3. Nonconforming means that none of V-0 to V-2 applies.

[Table 3]

| | V-0 | V-1 | V-2 |
|---|---|---|---|
| Afterflame time of each sample | 10 seconds or less | 30 seconds or less | 30 seconds or less |
| Total afterflame time of 5 samples | 50 seconds or less | 250 seconds or less | 250 seconds or less |
| Cotton ignition by dripping | absent | absent | present |

[Table 4]

| | Comparative Example 1 | Comparative Example 2 | Example 1 | Comparative Example 5 |
|---|---|---|---|---|
| PC-1 | | | 100 | 100 |

(continued)

| | Comparative Example 1 | Comparative Example 2 | Example 1 | Comparative Example 5 |
|---|---|---|---|---|
| PC-2 | 100 | 100 | | |
| Virgin carbon fiber-1 | 31 | | | |
| Recycled carbon fiber | | 37 | 37 | 30 |
| Phosphate | 21 | 22 | 22 | 0.004 |
| Anti-dripping agent | 0.8 | 0.8 | 0.8 | |
| Terminal OH group content [ppm] | 140 | 140 | 590 | 590 |
| Tensile strength [MPa] | 154 | 144 | 151 | 143 |
| Tensile modulus [MPa] | 16600 | 16000 | 16800 | 17100 |
| Tensile strain [%] | 2 | 1 | 1 | 1 |
| Flexural strength [MPa] | 222 | 180 | 201 | 195 |
| Retention ratio of flexural strength relative to Comparative Example 1 | 100 | 81 | 91 | 88 |
| Flexural modulus [MPa] | 14700 | 14800 | 15400 | 14300 |
| Charpy without notch [kJ/m$^2$] | 28 | 27 | 30 | 28 |
| Flammability UL-94 1.5 mm thick | V-0 | V-0 | V-0 | Nonconforming |

[Table 5]

| | Comparative Example 3 | Comparative Example 4 | Example 2 |
|---|---|---|---|
| PC-1 | | | 100 |
| PC-2 | 100 | 100 | |
| Fluidity modifier | 7 | 7 | 7 |
| Virgin carbon fiber-2 | 17 | | |
| Recycled carbon fiber | | 21 | 21 |
| Glass flake | 17 | 18 | 18 |
| Bromine-based flame retardant | 0.7 | 0.7 | 0.7 |
| Mold release agentt | 0.7 | 0.7 | 0.7 |
| Carbon black MB | 1.8 | 1.9 | 1.9 |
| Terminal OH group content of PC | 140 | 140 | 590 |
| Tensile strength [MPa] | 95 | 88 | 91 |
| Tensile modulus [MPa] | 5100 | 5200 | 5800 |
| Tensile strain [%] | 4 | 3 | 3 |
| Flexural strength [MPa] | 140 | 125 | 133 |
| Retention rate of flexural strength relative to Comparative Example 1 | 100 | 89 | 95 |
| Flexural modulus [MPa] | 5000 | 5100 | 4900 |
| Charpy without notch [kJ/m$^2$] | 42 | 34 | 36 |

(continued)

| | Comparative Example 3 | Comparative Example 4 | Example 2 |
|---|---|---|---|
| Flammability UL-94 1.5 mm thick | V-2 | V-2 | V-2 |

[Table 6]

| | Example 3 | Example 4 | Example 5 | Example 6 | Example 7 |
|---|---|---|---|---|---|
| PC-3 | 40 | 40 | 40 | 40 | 40 |
| PC-4 | 60 | 60 | 60 | 60 | |
| PC-5 | | | | | 60 |
| Fluidity modifier | | | | 8.3 | |
| Recycled carbon fiber | 35 | 34 | 48 | 38 | 35 |
| Phosphazene | 15 | 18 | 17 | 17 | 15 |
| Anti-dripping agent | 0.8 | 0.8 | 0.8 | 0.8 | 0.8 |
| Talc | 1.5 | 1.6 | 1.7 | 1.7 | 1.5 |
| Terminal OH group content [ppm] | 720 | 720 | 720 | 720 | 460 |
| Tensile strength [MPa] | 137 | 140 | 141 | 136 | 136 |
| Tensile modulus [MPa] | 13100 | 13500 | 15500 | 13400 | 13200 |
| Tensile strain [%] | 2 | 2 | 2 | 2 | 2 |
| Flexural strength [MPa] | 200 | 207 | 209 | 200 | 204 |
| Retention rate of flexural strength relative to Comparative Example 1 | 90 | 93 | 94 | 90 | 92 |
| Flexural modulus [MPa] | 14300 | 15300 | 17100 | 14700 | 14700 |
| Charpy without notch [kJ/m$^2$] | 31 | 30 | 29 | 30 | 31 |
| Flammability UL-94 1.5 mm thick | V-0 | V-0 | V-0 | V-0 | V-0 |

As is clear from the results, the molded products formed from the pellet of the present embodiment achieve mechanical strength close to that in the case of using virgin carbon fibers, even though recycled carbon fibers are used. The molded products were also excellent in flame retardancy (Examples 1 to 7).

## Claims

1. A pellet formed from a composition comprising 5 to 65 parts by mass of recycled carbon fibers as a heated product of carbon fiber reinforced resin, and 0.05 to 25 parts by mass of a nonmetal salt-based flame retardant, relative to 100 parts by mass of a polycarbonate resin having a terminal hydroxyl group content of 150 to 800 ppm.

2. The pellet according to claim 1, wherein a flexural strength of an ISO multi-purpose test piece molded from the pellet measured according to ISO 178 is retained by a retention rate of 82% or more, as compared with a flexural strength of an ISO multi-purpose test piece molded from a composition in which the polycarbonate resin contained in the pellet is replaced with an equal amount of a polycarbonate resin having a terminal hydroxyl group content of 140 ppm and the recycled carbon fibers are replaced with virgin carbon fibers such that the amount of carbon fibers is equal, measured according to ISO 178.

3. The pellet according to claim 1 or 2, wherein the polycarbonate resin comprises a recycled polycarbonate resin.

**4.** The pellet according to claim 1 or 2, further comprising 0.5 to 30 parts by mass of a fluidity modifier relative to 100 parts by mass of the polycarbonate resin.

**5.** The pellet according to claim 1 or 2, further comprising at least one selected from a mold release agent and carbon black in an amount of 0.1 to 10 parts by mass in total, relative to 100 parts by mass of the polycarbonate resin.

**6.** The pellet according to claim 1 or 2, wherein the nonmetal salt-based flame retardant comprises at least one selected from a phosphorus-based flame retardant and a halogen-based flame retardant.

**7.** The pellet according to claim 1 or 2, wherein the nonmetal salt-based flame retardant comprises 5 to 25 parts by mass of a phosphorus-based flame retardant relative to 100 parts by mass of a polycarbonate resin having a terminal hydroxyl group content of 150 to 800 ppm.

**8.** The pellet according to claim 1 or 2, wherein the nonmetal salt-based flame retardant comprises 0.05 to 5 parts by mass of a halogen-based flame retardant relative to 100 parts by mass of polycarbonate resin having a terminal hydroxyl group content of 150 to 800 ppm.

**9.** The pellet according to claim 1,

wherein a flexural strength of an ISO multi-purpose test piece molded from the pellet measured according to ISO 178 is retained by a retention rate of 82% or more, as compared with a flexural strength of an ISO multi-purpose test piece molded from a composition in which the polycarbonate resin contained in the pellet is replaced with an equal amount of a polycarbonate resin having a terminal hydroxyl group content of 140 ppm and the recycled carbon fibers are replaced with virgin carbon fibers such that the amount of carbon fibers is equal, measured according to ISO 178,
the polycarbonate resin comprises a recycled polycarbonate resin,
the pellet further comprises 0.5 to 30 parts by mass of a fluidity modifier relative to 100 parts by mass of the polycarbonate resin,
the pellet further comprises at least one selected from a mold release agent and carbon black in an amount of 0.1 to 10 parts by mass in total, relative to 100 parts by mass of the polycarbonate resin, and
the nonmetal salt-based flame retardant comprises at least one selected from a phosphorus-based flame retardant and a halogen-based flame retardant.

**10.** A molded product formed from the pellet according to claim 1, 2 or 9.

**11.** A method for producing a pellet, comprising feeding 100 parts by mass of a polycarbonate resin having a terminal hydroxyl group content of 150 to 800 ppm, 5 to 65 parts by mass of recycled carbon fibers as a heated product of a carbon fiber reinforced resin, and 0.05 to 25 parts by mass of a nonmetal salt-based flame retardant, into an extruder and melt-kneading the mixture.

## INTERNATIONAL SEARCH REPORT

International application No.
**PCT/JP2022/041640**

### A. CLASSIFICATION OF SUBJECT MATTER

***C08L 69/00***(2006.01)i; ***B29C 70/40***(2006.01)i; ***C08J 5/06***(2006.01)i; ***C08K 3/04***(2006.01)i; ***C08K 5/521***(2006.01)i; ***C08K 7/06***(2006.01)i
FI: C08L69/00; C08K3/04; C08K7/06; C08K5/521; C08J5/06; B29C70/40

According to International Patent Classification (IPC) or to both national classification and IPC

### B. FIELDS SEARCHED

Minimum documentation searched (classification system followed by classification symbols)

C08L69/00; B29C70/40; C08J5/06; C08K3/04; C08K5/521; C08K7/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2020-41253 A (DAIWABO HOLDINGS CO., LTD.) 19 March 2020 (2020-03-19) claims, paragraphs [0015]-[0016], [0057], [0062], examples 7, 15 | 10<br>1-9, 11 |
| A | WO 2018/020888 A1 (MITSUBISHI CHEMICAL CORP.) 01 February 2018 (2018-02-01) paragraph [0156] | 1-11 |
| A | JP 2004-225003 A (MIRAIAL KK) 12 August 2004 (2004-08-12) claims, examples | 1-11 |
| A | JP 2019-155634 A (MITSUBISHI HEAVY IND., LTD.) 19 September 2019 (2019-09-19) claims, examples | 1-11 |
| P, A | WO 2021/230132 A1 (MITSUBISHI ENGINEERING-PLASTICS CORP.) 18 November 2021 (2021-11-18) claims, examples | 1-11 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 November 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2022/041640**

| Patent document cited in search report | Publication date (day/month/year) | Patent family member(s) | Publication date (day/month/year) |
|---|---|---|---|
| JP 2020-41253 A | 19 March 2020 | (Family: none) | |
| WO 2018/020888 A1 | 01 February 2018 | (Family: none) | |
| JP 2004-225003 A | 12 August 2004 | (Family: none) | |
| JP 2019-155634 A | 19 September 2019 | (Family: none) | |
| WO 2021/230132 A1 | 18 November 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011063812 A
- WO 2018212016 A
- JP 2003026911 A
- JP 4736260 B
- JP 2021031633 A
- JP 2019056035 A
- JP 6183822 B